# EUROPEAN PATENT APPLICATION

(11) **EP 2 966 105 A1**
(43) Date of publication of application: **13.01.2016**
(21) Application number: 14761029.9
(22) Date of filing: 28.02.2014
(51) Int. Cl.: C08G 18/38, G02B 1/04

(54) **COMPOSITION FOR OPTICAL MATERIAL AND OPTICAL MATERIAL OBTAINED THEREFROM**

(30) Priority: 04.03.2013 JP 2013041811
(71) Applicant: Mitsubishi Gas Chemical Company, Inc., Tokyo 100-8324 (JP)
(72) Inventor: KOSHIISHI Eiji, Tokyo 100-8324 (JP); HORITA Akinobu, Tokyo 125-8601 (JP); TAKEUCHI Motoharu, Kamisu-shi Ibaraki 314-0102 (JP)
(74) Representative: Müller-Boré & Partner Patentanwälte PartG mbB
(86) International application number: PCT/JP2014/055009
(87) International publication number: WO 2014/136663

(57) **Abstract**

With the present invention, it is possible to provide a composition for optical materials which comprises: a polythiol compound satisfying any one of the following i) to iii) i) the compound has an ammonium cation concentration of 0.1 to 400 µmol/kg, ii) the compound has a thiocyanic acid anion concentration of 0.1 to 600 µmol/kg, and iii) the compound has an ammonium cation concentration of 0.1 to 400 µmol/kg and a thiocyanic acid anion concentration of 0.1 to 600 µmol/kg, the product of the ammonium cation concentration and the thiocyanic acid anion concentration being 0.01 to 100,000 (µmol/kg)²; and a polyisocyanate compound.

## Description

### TECHNICAL FIELD

The present invention relates to a composition for optical materials, etc., and particularly relates to a composition for optical materials suitable for optical materials such as a plastic lens, a prism, an optical fiber, an information recording substrate, a filter and an optical adhesive, in particular a plastic lens, etc. Further, the present invention relates to a method for producing an optical material having good optical physical properties by polymerization and curing of a composition for optical materials containing a polythiol compound and a polyisocyanate compound.

### BACKGROUND ART

An optical material made of a resin is lighter and less fragile compared to an optical material made of an inorganic material, and can be dyed. Therefore, recently, it has been rapidly and widely spread as an optical material such as an eyeglass lens and a camera lens.

A resin for optical materials having higher performance has been demanded. Specifically, a resin for optical materials having a higher refractive index, a higher Abbe number, a lower specific gravity, a higher heat resistance, etc. has been demanded. Responding to such a demand, various resins for optical materials have been developed and used.

Among such resins, resins obtained by polymerization and curing of a composition for optical materials containing a polythiol compound have been actively proposed. Examples thereof include polythiourethane-based resins obtained by subjecting a polythiol compound and a polyiso(thio)cyanate compound to a polymerization reaction as shown in Patent Documents 1 and 2. These resins have a high refractive index and are excellent in transparency, impact resistance, dye-affinity, processability, etc. Among such properties, transparency of resins is essential for optical materials.

However, when producing a resin for optical materials, white turbidity may be caused in a resin or optical material obtained by polymerization. In the case of intended use for optical materials, if white turbidity is caused after curing, all become defective products, resulting in a great loss. Accordingly, a technique of predicting the possibility of occurrence of white turbidity after curing and judging whether it is good or bad prior to curing is desired. Patent Document 3 discloses a polythiol compound, wherein the initial value of the turbidity is 0.5 ppm or less and the turbidity after stored at 50°C for 7 days is 0.6 ppm or less, and a composition for optical materials consisting of the polythiol compound and a polyiso(thio)cyanate compound. However, the document does not disclose any cause for increasing the turbidity of the polythiol compound, and it is impossible to predict the possibility of occurrence of white turbidity in a resin after curing unless a 7-day storage test is conducted.

### PRIOR ART DOCUMENTS

### PATENT DOCUMENTS

Patent Document 1: Japanese Laid-Open Patent Publication No. H07-252207
Patent Document 2: Japanese Laid-Open Patent Publication No. H09-110956
Patent Document 3: Japanese Laid-Open Patent Publication No. 2011-231305

### SUMMARY OF THE INVENTION

### PROBLEMS TO BE SOLVED BY THE INVENTION

The problem to be solved by the present invention is to provide a composition for optical materials containing a polythiol compound, wherein the possibility of occurrence of white turbidity in a resin after polymerization and curing can be predicted and judged and it is possible to judge whether it is good or bad without a storage test prior to polymerization and curing.

### MEANS FOR SOLVING THE PROBLEMS

The present inventors diligently made researches in order to solve the above-described problems and found that the problems can be solved by the present invention described below. Specifically, the present invention is as follows:
<1> A composition for optical materials which comprises: a polythiol compound satisfying any of the following i) to iii)
   i) the compound has an ammonium cation concentration of 0.1 to 400 µmol/kg,
   ii) the compound has a thiocyanic acid anion concentration of 0.1 to 600 µmol/kg, or
   iii) the compound has an ammonium cation concentration of 0.1 to 400 µmol/kg and a thiocyanic acid anion concentration of 0.1 to 600 µmol/kg, and an ion concentration product of the ammonium cation and the thiocyanic acid anion is 0.01 to 100,000 (µmol/kg)²;
      and a polyisocyanate compound.
<2> The composition for optical materials according to item <1>, wherein the polythiol compound is at least one compound selected from the group consisting of 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene and 2,5-bis(mercaptomethyl)-1,4-dithiane.
<3> A method for producing the composition for optical materials according to item <1> or <2>, wherein the polythiol compound is mixed with the polyisocyanate compound.
<4> An optical material obtained by polymerizing the composition for optical materials according to item <1> or <2>.
<5> Use of a polythiol compound satisfying any of i) to iii) below for a composition for optical materials:
   i) the compound has an ammonium cation concentration of 0.1 to 400 µmol/kg;
   ii) the compound has a thiocyanic acid anion concentration of 0.1 to 600 µmol/kg; or
   iii) the compound has an ammonium cation concentration of 0.1 to 400 µmol/kg and a thiocyanic acid anion concentration of 0.1 to 600 µmol/kg, and an ion concentration product of the ammonium cation and the thiocyanic acid anion is 0.01 to 100,000 (µmol/kg)².

### ADVANTAGEOUS EFFECT OF THE INVENTION

According to the present invention, it is possible to provide a composition for optical materials containing a polythiol compound, etc., wherein it is possible to predict the possibility of occurrence of white turbidity after polymerization and curing and judge whether it is good or bad prior to polymerization and curing, which was difficult to be carried out by conventional techniques.

### EMBODIMENTS FOR CARRYING OUT THE INVENTION

The polythiol compound to be used in the present invention is not particularly limited and it is sufficient when the compound has at least two thiol groups in one molecule, but a polythiol compound, which is produced by reacting an organic halogen compound and/or an alcohol compound with a thiourea to obtain an isothiouronium salt and hydrolyzing the isothiouronium salt under basic conditions, is particularly preferably used.

As a method for adjusting the ammonium cation concentration in the polythiol compound to 0.1 to 400 µmol/kg, for example, means such as "washing with water" and "distillation and purification" can be used, but the method is not limited thereto.

Further, as a method for adjusting the thiocyanic acid anion concentration in the polythiol compound to 0.1 to 600 µmol/kg, for example, means such as "washing with water" and "distillation and purification" can be used, but the method is not limited thereto.

Specific examples of the polythiol compound include: aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalate bis(2-mercaptoethylester), 2,3-dimercapto-1-propanol(2-mercaptoacetate), 2,3-dimercapto-1-propanol(3-mercaptopropionate), diethyleneglycol bis(2-mercaptoacetate), diethyleneglycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl)ether, ethyleneglycol bis(2-mercaptoacetate), ethyleneglycol bis(3-mercaptopropionate), trimethylolpropane bis(2-mercaptoacetate), trimethylolpropane bis(3-mercaptopropionate), pentaerythritol tetrakis(2-mercaptoacetate), pentaerythritol tetrakis(3-mercaptopropionate) and tetrakis(mercaptomethyl)methane;
aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol and 2,4-di(p-mercaptophenyl)pentane;
aromatic polythiol compounds containing a sulfur atom in addition to a mercapto group, such as 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene and 1,3,5-tris(mercaptoethylthio)-benzene and nuclear alkylated derivatives thereof;
aliphatic polythiol compounds containing a sulfur atom in addition to a mercapto group, such as bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4, 8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, bis(mercaptomethyl)-3,6,9-trithia-1,11-undecanedithiol, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, bis(1,3-dimercaptopropyl) sulfide, 2,5-dimercapto-1,4-dithiane, 2,5-dimercaptomethyl-1,4-dithiane, 2,5-dimercaptomethyl-2,5-dimethyl-1,4-dithiane, bis(mercaptomethyl) disulfide, bis(mercaptoethyl) disulfide and bis(mercaptopropyl) disulfide, and esters of thioglycolates and mercaptopropionates thereof;
other aliphatic polythiol compounds containing a sulfur atom and an ester bond in addition to a mercapto group, such as hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxypropylsulfide bis(2-mercaptoacetate), hydroxypropylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), hydroxypropyldisulfide bis(2-mercaptoacetate), hydroxypropyldisulfide bis(3-mercaptopropionate), 2-mercaptoethylether bis(2-mercaptoacetate), 2-mercaptoethylether bis(3-mercaptopropionate), 1,4-dithiane-2,5-diol bis(2-mercaptoacetate), 1,4-dithiane-2,5-diol bis(3-mercaptopropionate), bis(2-mercaptoethyl)thiodiglycolate, bis(2-mercaptoethyl)thiodipropionate, bis(2-mercaptoethyl)-4,4-thiodibutyrate, bis(2-mercaptoethyl)dithiodiglycolate, bis(2-mercaptoethyl)dithiodipropionate, bis(2-mercaptoethyl)-4,4-dithiodibutyrate, bis(2,3-dimercaptopropyl)thiodiglycolate, bis(2,3-dimercaptopropyl)thiodipropionate, bis(2,3-dimercaptopropyl)dithioglycolate and bis(2,3-dimercaptopropyl)dithiodipropionate;
heterocyclic compounds containing a sulfur atom in addition to a mercapto group, such as 3,4-thiophenedithiol and 2,5-dimercapto-1,3,4-thiadiazole;
compounds containing a hydroxy group in addition to a mercapto group, such as 2-mercaptoethanol, 3-mercapto-1,2-propanediol, glycerin di(mercaptoacetate), 1-hydroxy-4-mercaptocyclohexane, 2,4-dimercaptophenol, 2-mercaptohydroquinone, 4-mercaptophenol, 3,4-dimercapto-2-propanol, 1,3-dimercapto-2-propanol, 2,3-dimercapto-1-propanol, 1,2-dimercapto-1,3-butanediol, pentaerythritol tris(3-mercaptopropionate), pentaerythritol mono(3-mercaptopriopionate), pentaerythritol bis(3-mercaptopropionate), pentaerythritol tris(thioglycolate), dipentaerythritol pentakis(3-mercaptopropionate), hydroxymethyl-tris(mercaptoethylthiomethyl)methane and 1-hydroxyethylthio-3-mercaptoethylthiobenzene;
compounds having a dithioacetal or dithioketal skeleton, such as 1,1,3,3-tetrakis(mercaptomethylthio)propane, 1,1,2,2-tetrakis(mercaptomethylthio)ethane, 4,6-bis(mercaptomethylthio)-1,3-dithiacyclohexane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 2-(4,5-dimercapto-2-thiapentyl)-1,3-dithiacyclopentane, 2,2-bis(mercaptomethyl)-1,3-dithiacyclopentane, 2,5-bis(4,4-bis(mercaptomethylthio)-2-thiabutyl)-1,4-dithiane, 2,2-bis(mercaptomethylthio)-1,3-propanedithiol, 3-mercaptomethylthio-1,7-dimercapto-2,6-dithiaheptane, 3,6-bis(mercaptomethylthio)-1,9-dimercapto-2,5,8-trithianonane, 4,6-bis(mercaptomethylthio)-1,9-dimercapto-2,5,8-trithianonane, 3-mercaptomethylthio-1,6-dimercapto-2,5-dithiahexane, 2-(2,2-bis(mercaptomethylthio)ethyl)-1,3-dithiethane, 1,1,9,9-tetrakis(mercaptomethylthio)-5-(3,3-bis(mercaptomethylthio)-1-thiapropyl)-3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathian onadecane, 9-(2,2-bis(mercaptomethylthio)ethyl)-3,5,13,15-tetrakis(mercaptomethylthio)-1,17-dim ercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahe xadecane, 8-{bis(mercaptomethylthio)methyl}-3,4,12,13-tetrakis(mercaptomethylthio)-1,15-dimer capto-2,5,7,9,11,14-hexathiapentadecane, 4,6-bis {3,5-bis(mercaptomethylthio)-7-mercapto-2,6-dithiaheptylthio}-1,3-dithiane, 4-{3,5-bis(mercaptomethylthio)-7-mercapto-2,6-dithiaheptylthio}-6-mercaptomethylthi o-1,3-dithiane, 1,1-bis{4-(6-mercaptomethylthio)-1,3-dithianylthio}-3,3-bis(mercaptomethylthio)propa ne, 1,3-bis{4-(6-mercaptomethylthio)-1,3-dithianylthio}-1,3-bis(mercaptomethylthio)propa ne, 1-{4-(6-mercaptomethylthio)-1,3-dithianylthio}-3-{2,2-bis(mercaptomethylthio)ethyl}-7,9-bis(mercaptomethylthio)-2,4,6,10-tetrathiaundecane, 1-{4-(6-mercaptomethylthio)-1,3-dithianylthio}-3-{2-(1,3-dithietanyl)}methyl-7,9-bis( mercaptomethylthio)-2,4,6,10-tetrathiaundecane, 1,5-bis{4-(6-mercaptomethylthio)-1,3-dithianylthio}-3-{2-(1,3-dithietanyl)}methyl-2,4-dithiapentane, 4,6-bis[3-{2-(1,3-dithietanyl)}methyl-5-mercapto-2,4-dithiapentylthio]-1,3-dithiane, 4,6-bis{4-(6-mercaptomethylthio)-1,3-dithianylthio}-1,3-dithiane, 4-{4-(6-mercaptomethylthio)-1,3-dithianylthio}-6-{4-(6-mercaptomethylthio)-1,3-dithia nylthio}-1,3-dithiane, 3-{2-(1,3-dithietanyl)}methyl-7,9-bis(mercaptomethylthio)-1,11-dimercapto-2,4,6,10-te trathiaundecane, 9-{2-(1,3-dithietanyl)}methyl-3,5,13,15-tetrakis(mercaptomethylthio)-1,17-dimercapto-2,6,8,10,12,16-hexathiaheptadecane, 3-{2-(1,3-dithietanyl)}methyl-7,9,13,15-tetrakis(mercaptomethylthio)-1,17-dimercapto-2,4,6,10,12,16-hexathiaheptadecane, 3,7-bis{2-(1,3-dithietanyl)}methyl-1,9-dimercapto-2,4,6,8-tetrathianonane, 4-{3,4,8,9-tetrakis(mercaptomethylthio)-11-mercapto-2,5,7,10-tetrathiaundecy}-5-mergc aptomethylthio-1,3-dithiolane, 4,5-bis{3,4-bis(mercaptomethylthio)-6-mercapto-2,5-dithiahexylthio}-1,3-dithiolane, 4-{3,4-bis(mercaptomethylthio)-6-mercapto-2,5-dithiahexylthio}-5-mercaptomethylthio -1,3-dithiolane, 4-{3-bis(mercaptomethylthio)methyl-5,6-bis(mercaptomethylthio)-8-mercapto-2,4,7-trit hiaoctyl}-5-mercaptomethylthio-1,3-dithiolane, 2-[bis{3,4-bis(mercaptomethylthio)-6-mercapto-2,5-dithiahexylthio}methyl]-1,3-dithiet hane, 2-{3,4-bis(mercaptomethylthio)-6-mercapto-2,5-dithiahexylthio}mercaptomethylthiome thyl-1,3-dithiethane, 2-{3,4,8,9-tetrakis(mercaptomethylthio)-11-mercapto-2,5,7,10-tetrathiaundecylthio}mer captomethylthiomethyl-1,3-dithiethane, 2-{3-bis(mercaptomethylthio)methyl-5,6-bis(mercaptomethylthio)-8-mercapto-2,4,7-trit hiaoctyl}mercaptomethylthiomethyl-1,3-dithiethane, 4,5-bis[1-{2-(1,3-dithietanyl)}-3-mercapto-2-thiapropylthio]-1,3-dithiolane, 4-[1-{2-(1,3-dithietanyl)}-3-mercapto-2-thiapropylthio]-5-{1,2-bis(mercaptomethylthio )-4-mercapto-3-thiabutylthio}-1,3-dithiolane, 2-[bis{4-(5-mercaptomethylthio-1,3-dithiolanyl)thio}]methyl-1,3-dithiethane and 4-{4-(5-mercaptomethylthio-1,3-dithiolanyl)thio}-5-[1-{2-(1,3-dithietanyl)}-3-mercapt o-2-thiapropylthio]-1,3-dithiolane, and oligomers thereof;
compounds having an orthotrithioformic ester skeleton, such as tris(mercaptomethylthio)methane, tris(mercaptoethylthio)methane, 1,1,5,5-tetrakis(mercaptomethylthio)-2,4-dithiapentane, bis(4,4-bis(mercaptomethylthio)-1,3-dithiabutyl)(mercaptomethylthio)methane, tris(4,4-bis(mercaptomethylthio)-1,3-dithiabutyl)methane, 2,4,6-tris(mercaptomethylthio)-1,3,5-trithiacyclohexane, 2,4-bis(mercaptomethylthio)-1,3,5-trithiacyclohexane, 1,1,3,3-tetrakis(mercaptomethylthio)-2-thiapropane, bis(mercaptomethyl)methylthio-1,3,5-trithiacyclohexane, tris((4-mercaptomethyl-2,5-dithiacyclohexyl-1-yl)methylthio)methane, 2,4-bis(mercaptomethylthio)-1,3-dithiacyclopentane, 2-mercaptoethylthio-4-mercaptomethyl-1,3-dithiacyclopentane, 2-(2,3-dimercaptopropylthio)-1,3-dithiacyclopentane, 4-mercaptomethyl-2-(2,3-dimercaptopropylthio)-1,3-dithiacyclopentane, 4-mercaptomethyl-2-(1,3-dimercapto-2-propylthio)-1,3-dithiacyclopentane, tris(2,2-bis(mercaptomethylthio)-1-thiaethyl)methane, tris(3,3-bis(mercaptomethylthio)-2-thiapropyl)methane, tris(4,4-bis(mercaptomethylthio)-3-thiabutyl)methane, 2,4,6-tris(3,3-bis(mercaptomethylthio)-2-thiapropyl)-1,3,5-trithiacyclohexane and tetrakis(3,3-bis(mercaptomethylthio)-2-thiapropyl)methane, and oligomers thereof; and
compounds having an orthotetrathiocarbonic ester skeleton, such as 3,3'-di(mercaptomethylthio)-1,5-dimercapto-2,4-dithiapentane, 2,2'-di(mercaptomethylthio)-1,3-dithiacyclopentane, 2,7-di(mercaptomethyl)-1,4,5,9-tetrathiaspiro[4.4]nonane and 3,9-dimercapto-1,5,7,11-tetrathiaspiro[5.5]undecane, and oligomers thereof.

Note that the polythiol compound is not limited to the above-described exemplary compounds. Further, the above-described exemplary compounds may be used solely, or two or more of them may be used in combination.

Among the above-described exemplary compounds, preferred are 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene and 2,5-bis(mercaptomethyl)-1,4-dithiane.

In the present invention, the ammonium cation concentration in the polythiol compound is obtained by sufficiently mixing the polythiol compound with pure water with stirring to extract ammonium cation contained in the polythiol compound into pure water, then measuring the ammonium cation concentration in the water layer using ion chromatography and calculating the amount of ammonium cation (mol) contained per 1 kg of the polythiol compound. The polythiol compound, which has an ammonium cation concentration of 0.1 to 400 µmol/kg according to the measurement, is used. The ammonium cation concentration is preferably 0.1 to 200 µmol/kg, and more preferably 0.1 to 100 µmol/kg.

When the concentration of ammonium cation contained per 1 kg of the polythiol compound is more than 400 µmol/kg, the rate of occurrence of white turbidity in an optical material after polymerization and curing is very high, and such an optical material with white turbidity is unusable. Accordingly, by measuring the ammonium cation concentration in the polythiol compound, the possibility of occurrence of white turbidity in a resin to be obtained can be predicted and judged without polymerization and curing, and it is possible to judge whether or not the polythiol compound can be used in the resin composition for optical materials.

In the present invention, the thiocyanic acid anion concentration in the polythiol compound is obtained by sufficiently mixing the polythiol compound with pure water with stirring to extract thiocyanic acid anion contained in the polythiol compound into pure water, then measuring the thiocyanic acid anion concentration in the water layer using the color identification test of iron (III)-thiocyanate complex generated by a reaction with iron (III) ions and calculating the amount of thiocyanic acid anion (mol) contained per 1 kg of the polythiol compound. The polythiol compound, which has a thiocyanic acid anion concentration of 0.1 to 600 µmol/kg according to the measurement, is used. The thiocyanic acid anion concentration is preferably 0.1 to 400 µmol/kg, and more preferably 0.1 to 200 µmol/kg.

When the concentration of thiocyanic acid anion contained per 1 kg of the polythiol compound is more than 600 µmol/kg, the rate of occurrence of white turbidity in an optical material after polymerization and curing is very high, and such an optical material with white turbidity is unusable. Accordingly, by measuring the thiocyanic acid anion concentration in the polythiol compound, the possibility of occurrence of white turbidity in a resin to be obtained can be predicted and judged without polymerization and curing, and it is possible to judge whether or not the polythiol compound can be used in the resin composition for optical materials.

In the present invention, the ion concentration product of ammonium cation and thiocyanic acid anion contained in the polythiol compound is obtained by calculating the product of the ammonium cation concentration and the thiocyanic acid anion concentration measured using the aforementioned methods. The polythiol compound, which has an ion concentration product of 0.01 to 100,000 (µmol/kg)² according to the measurement of both the ion concentrations and calculation of the ion concentration product, is used. The ion concentration product is preferably 0.01 to 50,000 (µmol/kg)², more preferably 0.01 to 10,000 (µmol/kg)², and even more preferably 0.01 to 5,000 (µmol/kg)².

When the ion concentration product of ammonium cation and thiocyanic acid anion contained in the polythiol compound is more than 100,000 (µmol/kg)², the rate of occurrence of white turbidity in an optical material after polymerization and curing is very high, and such an optical material with white turbidity is unusable. Accordingly, by measuring the ion concentration product of ammonium cation and thiocyanic acid anion contained in the polythiol compound, the possibility of occurrence of white turbidity in a resin to be obtained can be predicted and judged without polymerization and curing, and it is possible to judge whether or not the polythiol compound can be used in the resin composition for optical materials.

In the present invention, the composition for optical materials containing the polythiol compound is a polymerizable composition containing the polythiol compound and the polyisocyanate compound for obtaining a polythiourethane-based resin. The amount of the polythiol compound to be added in the present invention is not limited, but is preferably 1 to 99 parts by mass, more preferably 5 to 90 parts by mass, even more preferably 7 to 80 parts by mass, and most preferably 10 to 70 parts by mass relative to 100 parts by mass of the total of the composition for optical materials.

In the present invention, the polyisocyanate compound to be used in the polymerizable composition containing the polythiol compound and the polyisocyanate compound for obtaining a polythiourethane-based resin is not particularly limited, and it is sufficient when the compound has at least two isocyanate groups in one molecule.

Specific examples of the polyisocyanate compound include hexamethylene diisocyanate, 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, dicyclohexylmethane diisocyanate, isophorone diisocyanate, 1,2-diisocyanatobenzene, 1,3-diisocyanatobenzene, 1,4-diisocyanatobenzene, 2,4-diisocyanatotoluene, ethylphenylene diisocyanate, dimethylphenylene diisocyanate, trimethylbenzene triisocyanate, benzene triisocyanate, biphenyl diisocyanate, toluidine diisocyanate, 4,4'-methylene bis(phenylisocyanate), 1,2-bis(isocyanatomethyl)benzene, 1,3-bis(isocyanatomethyl)benzene, 1,4-bis(isocyanatomethyl)benzene, 1,2-bis(isocyanatoethyl)benzene, 1,3-bis(isocyanatoethyl)benzene, 1,4-bis(isocyanatoethyl)benzene, α,α,α',α'-tetramethylxylylene diisocyanate, bis(isocyanatomethyl)naphthalene, bis(isocyanatomethyl phenyl)ether, bis(isocyanatomethyl)sulfide, bis(isocyanatoethyl)sulfide, bis(isocyanatopropyl)sulfide, 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane and 2,5-diisocyanatomethyl-1,4-dithiane.

Furthermore, a halogenated substitution product such as a chlorinated substitution product and a brominated substitution product, an alkylated substitution product, an alkoxylated substitution product, a nitrated substitution product, a prepolymer-type modified product with a polyhydric alcohol, a carbodiimide-modified product, a urea-modified product, a biuret-modified product and a dimerized or trimerized product thereof, etc. may also be used.

Note that the polyisocyanate compound is not limited to the above-described exemplary compounds. Further, the above-described exemplary compounds may be used solely, or two or more of them may be used in combination.

Among the above-described exemplary compounds, preferred are 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, 1,3-bis(isocyanatomethyl)benzene and α,α,α',α'-tetramethylxylylene diisocyanate.

Regarding the ratio between the polythiol compound and the polyisocyanate compound to be used, SH group/NCO group is usually 0.5 to 3.0, preferably 0.6 to 2.0, and more preferably 0.8 to 1.3. When SH group/NCO group is less than 0.5 or more than 3.0, the heat resistance of a polythiourethane-based resin obtained by polymerization and curing may be significantly reduced.

It is surely possible to add optional components such as a catalyst, an internal mold release agent, an ultraviolet absorber and a blueing agent to the composition for optical materials of the present invention according to need to further improve practicability of the material obtained.

In the present invention, as a catalyst for polymerization and curing of the composition for optical materials containing the polythiol compound and the polyisocyanate compound for obtaining a polythiourethane-based resin, a publicly-known urethanation catalyst is used. The amount of the polymerization catalyst to be added cannot be determined categorically because it varies depending on the components of the composition, the mixing ratio and the method for polymerization and curing, but the amount is usually 0.001 % by mass to 5% by mass, preferably 0.01 % by mass to 1% by mass, and most preferably 0.01% by mass to 0.5% by mass relative to the total amount of the composition for optical materials. When the amount of the polymerization catalyst to be added is more than 5% by mass, the refractive index and heat resistance of a cured product may be reduced and the cured product may be colored. When the amount is less than 0.001% by mass, the composition may be insufficiently cured, resulting in insufficient heat resistance.

When the composition for optical materials of the present invention is not easily released from the mold after polymerization, it is possible to use or add a publicly-known external and/or internal mold release agent to improve the ability of a cured product obtained to be released from the mold. Examples of the mold release agent include fluorine-based non-ionic surfactants, silicon-based non-ionic surfactants, phosphate esters, acidic phosphate esters, oxyalkylene-type acidic phosphate esters, alkali metal salts of acidic phosphate esters, alkali metal salts of oxyalkylene-type acidic phosphate esters, metal salts of higher fatty acid, higher fatty acid esters, paraffin, wax, higher aliphatic amides, higher aliphatic alcohols, polysiloxanes and aliphatic amine ethylene oxide adducts. These substances may be used solely, or two or more of them may be used in combination. The amount of the mold release agent to be added is usually 0.0001 to 5% by mass of the total amount of the composition for optical materials.

Preferred examples of the ultraviolet absorber to be added to the composition for optical materials of the present invention include benzotriazole-based compounds. Specific examples of particularly preferred compounds include 2-(2-hydroxy-5-methylphenyl)-2H-benzotriazol, 5-chloro-2-(3,5-di-tert-butyl-2-hydroxyphenyl)-2H-benzotriazol, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, 2-(2-hydroxy-4-octyloxyphenyl)-2H-benzotriazole and 2-(2-hydroxy-5-tert-octylphenyl)-2H-benzotriazole. These substances may be used solely, or two or more of them may be used in combination. The amount of the ultraviolet absorber to be added is usually 0.01 to 10% by mass of the total amount of the composition for optical materials.

Preferred examples of the blueing agent to be added to the composition for optical materials of the present invention include anthraquinone-based compounds. These substances may be used solely, or two or more of them may be used in combination. The amount of the blueing agent to be added is usually 0.0001 to 5% by mass of the total amount of the composition for optical materials.

In the present invention, the optical material made of the polythiourethane-based resin obtained by polymerization and curing of the composition for optical materials containing the polythiol compound is usually produced by cast molding and polymerization. Specifically, the polythiol compound is mixed with the polyisocyanate compound. The obtained mixture (composition for optical materials) is subjected to defoaming by an appropriate method according to need, and then injected into a mold for optical materials and usually heated gradually from a low temperature to a high temperature to be polymerized. After that, it is released from the mold, thereby obtaining the optical material.

In the present invention, the composition for optical materials is preferably subjected to the deaeration treatment before injected into a mold for optical materials. The deaeration treatment is carried out under reduced pressure before, during or after mixing a compound which can react with a part or all of the components of the composition, a polymerization catalyst and an additive. Preferably, the deaeration treatment is carried out under reduced pressure during or after mixing. The treatment conditions are as follows: under a reduced pressure of 0.001 to 50 torr; 1 minute to 24 hours; and 0°C to 100°C. The degree of pressure reduction is preferably 0.005 to 25 torr, and more preferably 0.01 to 10 torr. The degree of pressure reduction may be varied within such a range. The deaeration time is preferably 5 minutes to 18 hours, and more preferably 10 minutes to 12 hours. The temperature at the time of deaeration is preferably 5 to 80°C, more preferably 10 to 60°C, and the temperature may be varied within these ranges. The operation of surface renewal of the composition for optical materials by means of stirring, blowing a gas, vibration caused by ultrasonic wave or the like during the deaeration treatment is preferable in terms of the enhancement of the deaeration effect.

In addition, it is preferred to filter impurities and the like from the composition for optical materials and/or respective raw materials before mixing to be purified using a filter having a pore diameter of 0.05 to 10 µm for further improving the quality of the optical material of the present invention.

The composition for optical materials after the above-described reaction and treatment is injected into a mold made of glass or metal, and a polymerization and curing reaction is promoted by heating or irradiation with active energy ray such as ultraviolet light, and after that, a product obtained is released from the mold. The optical material is produced in this way. The composition for optical materials is preferably polymerized and cured by heating to produce an optical material. In this case, the curing time is 0.1 to 200 hours, preferably 1 to 100 hours, and the curing temperature is -10 to 160°C, preferably 0 to 140°C. The polymerization may be conducted by carrying out a step of holding the composition at a predetermined polymerization temperature for a predetermined amount of time, a step of increasing the temperature at a rate of 0.1 °C to 100°C/h and a step of decreasing the temperature at a rate of 0.1 °C to 100°C/h, or a combination of these steps. Further, in the method for producing the optical material of the present invention, it is preferred to anneal the cured product at a temperature of 50 to 150°C for about 10 minutes to 5 hours after the completion of the polymerization in terms of eliminating distortion of the optical material.

The polythiourethane-based resin produced by the method of the present invention is characterized in that it has excellent transparency and is free of white turbidity, and further has good color phase. Accordingly, the resin is suitably used as an optical material for lenses, prisms, etc. The resin is particularly suitably used for lenses such as eyeglass lenses and camera lenses.

Further, the optical material may be subjected to physical and chemical treatments such as surface polishing, antistatic treatment, hard coat treatment, non-reflection coat treatment, dyeing treatment and photochromic treatment for the purpose of antireflection, imparting high hardness, improving abrasive resistance, improving chemical resistance, imparting antifog properties, imparting fashionability or the like according to need.

### EXAMPLES

Hereinafter, the present invention will be specifically described by way of working examples, but the present invention is not limited thereto. Evaluations were carried out in manners described below.

### <Concentration of ammonium cation contained in polythiol compound>

50 g of the polythiol compound and 50 g of pure water were put into a glass vial, the vial was stopped airtightly, and then the materials were sufficiently mixed with stirring using a shaker. After that, it was allowed to stand until the polythiol compound layer and the water layer were sufficiently separated from each other, the ammonium cation concentration in the water layer was measured using ion chromatography, and the amount of ammonium cation (mol) contained per 1 kg of the polythiol compound was calculated to obtain the ammonium cation concentration [NH₄⁺].

### <Concentration of thiocyanic acid anion contained in polythiol compound>

50 g of the polythiol compound and 50 g of pure water were put into a glass vial, the vial was stopped airtightly, and then the materials were sufficiently mixed with stirring using a shaker. After that, it was allowed to stand until the polythiol compound layer and the water layer were sufficiently separated from each other, the thiocyanic acid anion concentration in the water layer was measured using a "portable multi-parameter water quality meter PF-12" manufactured by MACHEREY-NAGEL and a "reagent of thiocyanic acid test NANOCOLOR Tube Test Thiocyanate 50" manufactured by MACHEREY-NAGEL, and the amount of thiocyanic acid anion (mol) contained per 1 kg of the polythiol compound was calculated to obtain the thiocyanic acid anion concentration [SCN⁻].

### <Ion concentration product of ammonium cation and thiocyanic acid anion contained in polythiol compound>

The product of the ammonium cation concentration and the thiocyanic acid anion concentration measured using the aforementioned methods [NH₄⁺] [SCN⁻] was calculated.

### <Transparency (white turbidity) of resin>

The presence or absence of white turbidity in the optical material (optical lens) produced by polymerization of the composition for optical materials was observed under a fluorescent light in a dark room. In this regard, 100 optical lenses were produced, and the evaluation was conducted on the below-described 5-point scale. A, B and C are regarded as acceptable.
A: Among 100 optical lenses, there is no optical lens having white turbidity.
B: 1 or more and less than 3 out of 100 optical lenses have white turbidity.
C: 3 or more and less than 6 out of 100 optical lenses have white turbidity.
D: 6 or more and less than 10 out of 100 optical lenses have white turbidity.
E: 10 or more out of 100 optical lenses have white turbidity.

### <Color tone of optical material (YI value)>

The optical material in the form of a circular flat plate (thickness: 5.0 mm, ϕ: 60 mm) was produced and the YI value thereof was measured using a spectroscopic colorimeter (Color Techno System Corporation, JS555).

### Examples 1-23

The composition for optical materials and the optical material of the present invention were prepared according to the production method 1 described below using 1,2-bis[(2-mercaptoethyl)thio]-3-mercaptopropane (hereinafter referred to as Compound A-1), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Examples 24 and 25

The composition for optical materials and the optical material of the present invention were prepared according to the production method 2 described below using bis(mercaptomethyl)-3,6,9-trithia-1,11-undecanedithiol (hereinafter referred to as Compound A-2), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Examples 26 and 27

The composition for optical materials and the optical material of the present invention were prepared according to the production method 3 described below using 1,2-bis[(2-mercaptoethyl)thio]-3-mercaptopropane (Compound A-1) and bis(mercaptomethyl) sulfide (hereinafter referred to as Compound A-3), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Examples 28 and 29

The composition for optical materials and the optical material of the present invention were prepared according to the production method 4 described below using bis(mercaptomethyl)-3,6,9-trithia-1,11-undecanedithiol (Compound A-2) and bis(mercaptomethyl) sulfide (hereinafter referred to as Compound A-4), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Examples 30 and 31

The composition for optical materials and the optical material of the present invention were prepared according to the production method 5 described below using 1,2-bis[(2-mercaptoethyl)thio]-3-mercaptopropane (Compound A-1) and 1,3-bis(mercaptomethyl)benzene (hereinafter referred to as Compound A-5), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Examples 32 and 33

The composition for optical materials and the optical material of the present invention were prepared according to the production method 6 described below using 1,2-bis[(2-mercaptoethyl)thio]-3-mercaptopropane (Compound A-1) and 2,5-bis(mercaptomethyl)-1,4-dithiane (hereinafter referred to as Compound A-6), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 1. The results are shown in Table 1.

### Comparative Examples 1 and 2

The composition for optical materials and the optical material of the present invention were prepared according to the production method 1 described below using 1,2-bis[(2-mercaptoethyl)thio]-3-mercaptopropane (Compound A-1), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

### Comparative Examples 3 and 4

The composition for optical materials and the optical material of the present invention were prepared according to the production method 2 described below using bis(mercaptomethyl)-3,6,9-trithia-1,11-undecanedithiol (Compound A-2), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

### Comparative Examples 5 and 6

The composition for optical materials and the optical material of the present invention were prepared according to the production method 3 described below using 1,2-bis[(2-mercaptoethyl)thio]-3-mercaptopropane (Compound A-1) and bis(mercaptomethyl) sulfide (Compound A-3), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

### Comparative Examples 7 and 8

The composition for optical materials and the optical material of the present invention were prepared according to the production method 4 described below using bis(mercaptomethyl)-3,6,9-trithia-1,11-undecanedithiol (Compound A-2) and bis(mercaptomethyl) sulfide (Compound A-4), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

### Comparative Examples 9 and 10

The composition for optical materials and the optical material of the present invention were prepared according to the production method 5 described below using 1,2-bis[(2-mercaptoethyl)thio]-3-mercaptopropane (Compound A-1) and 1,3-bis(mercaptomethyl)benzene (Compound A-5), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

### Comparative Examples 11 and 12

The composition for optical materials and the optical material of the present invention were prepared according to the production method 6 described below using 1,2-bis[(2-mercaptoethyl)thio]-3-mercaptopropane (Compound A-1) and 2,5-bis(mercaptomethyl)-1,4-dithiane (Compound A-6), wherein values of the ammonium cation concentration [NH₄⁺], the thiocyanic acid anion concentration [SCN⁻] and the product of the ammonium cation concentration and the thiocyanic acid anion concentration [NH₄⁺] [SCN⁻] are as described in Table 2. The results are shown in Table 2.

The production methods used in the above-described working examples and comparative examples will be described in detail below.

### <Production method 1>

0.05 parts by mass of dibutyltin dichloride as a curing catalyst and 0.10 parts by mass of dioctyl phosphate were mixed with and dissolved in 51 parts by mass of 1,3-bis(isocyanatomethyl)benzene (hereinafter referred to as Compound X-1) at 10 to 15°C. Further, 49 parts by mass of 1,2-bis[(2-mercaptoethyl)thio]-3-mercaptopropane (Compound A-1) was mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

### <Production method 2>

0.05 parts by mass of dibutyltin dichloride as a curing catalyst and 0.10 parts by mass of dioctyl phosphate were mixed with and dissolved in 50 parts by mass of 1,3-bis(isocyanatomethyl)benzene (Compound X-1) at 10 to 15°C. Further, 50 parts by mass of bis(mercaptomethyl)-3,6,9-trithia-1,11-undecanedithiol (Compound A-2) was mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

### <Production method 3>

0.06 parts by mass of dibutyltin dichloride as a curing catalyst and 0.12 parts by mass of dioctyl phosphate were mixed with and dissolved in 55 parts by mass of a mixture of 2,5-bis(isocyanatomethyl)-bicyclo[2.2.1]heptane and 2,6-bis(isocyanatomethyl)-bicyclo[2.2.1]heptane (hereinafter referred to as Compound X-2) at 10 to 15°C. Further, 40 parts by mass of 1,2-bis[(2-mercaptoethyl)thio]-3-mercaptopropane (Compound A-1) and 5 parts by mass of bis(mercaptomethyl) sulfide (Compound A-3) were mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

### <Production method 4>

0.06 parts by mass of dibutyltin dichloride as a curing catalyst and 0.12 parts by mass of dioctyl phosphate were mixed with and dissolved in 52 parts by mass of bis(isocyanatomethyl)cyclohexane (hereinafter referred to as Compound X-3) at 10 to 15°C. Further, 42 parts by mass of bis(mercaptomethyl)-3,6,9-trithia-1,11-undecanedithiol (Compound A-2) and 6 parts by mass of bis(mercaptoethyl) sulfide (Compound A-4) were mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

### <Production method 5>

0.06 parts by mass of dibutyltin dichloride as a curing catalyst and 0.12 parts by mass of dioctyl phosphate were mixed with and dissolved in 58.5 parts by mass of α,α,α',α'-tetramethylxylylene diisocyanate (hereinafter referred to as Compound X-4) at 10 to 15°C. Further, 36.5 parts by mass of 1,2-bis[(2-mercaptoethyl)thio]-3-mercaptopropane (Compound A-1) and 6 parts by mass of 1,3-bis(mercaptomethyl)benzene (Compound A-5) were mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

### <Production method 6>

0.03 parts by mass of dibutyltin dichloride as a curing catalyst and 0.05 parts by mass of dioctyl phosphate were mixed with and dissolved in 51 parts by mass of 1,3-bis(isocyanatomethyl)benzene (Compound X-1) at 10 to 15°C. Further, 39 parts by mass of 1,2-bis[(2-mercaptoethyl)thio]-3-mercaptopropane (Compound A-1) and 10 parts by mass of 2,5-bis(mercaptomethyl)-1,4-dithiane (Compound A-6) were mixed therewith to provide a homogeneous solution. This mixed homogeneous solution was subjected to defoaming at 600 Pa for 1 hour, and then filtered with a PTFE filter of 1 µm, injected into a mold (diameter: 70 mm, +5D) and polymerized with the temperature being elevated from 40°C to 130°C over 24 hours. After that, it was released from the mold, thereby obtaining an optical material.

**Table 1**

| | Composition (parts by mass) | | Thiol compound | | | Optical material | |
|---|---|---|---|---|---|---|---|
| | Thiol compound | Isocyanate compound | [NH₄⁺] µmol/kg | [SCN⁻] µmol/kg | [NH₄⁺] [SCN⁻] (µmol/kg)² | White turbidity | Color tone (YI value) |
| Example 1 | A-1 | X-1 | 10 | 105 | 1050 | A | 1.0 |
| Example 2 | A-1 | X-1 | 45 | 160 | 7200 | A | 1.0 |
| Example 3 | A-1 | X-1 | 82 | 185 | 15170 | B | 1.1 |
| Example 4 | A-1 | X-1 | 0.5 | 320 | 160 | A | 1.0 |
| Example 5 | A-1 | X-1 | 24 | 290 | 6960 | B | 1.1 |
| Example 6 | A-1 | X-1 | 65 | 390 | 25350 | B | 1.2 |
| Example 7 | A-1 | X-1 | 5 | 590 | 2950 | A | 1.1 |
| Example 8 | A-1 | X-1 | 20 | 420 | 8400 | B | 1.2 |
| Example 9 | A-1 | X-1 | 45 | 580 | 26100 | C | 1.3 |
| Example 10 | A-1 | X-1 | 96 | 588 | 56448 | C | 1.5 |
| Example 11 | A-1 | X-1 | 115 | 40 | 4600 | A | 1.0 |
| Example 12 | A-1 | X-1 | 120 | 78 | 9360 | B | 1.1 |
| Example 13 | A-1 | X-1 | 144 | 186 | 26784 | B | 1.2 |
| Example 14 | A-1 | X-1 | 122 | 300 | 36600 | C | 1.5 |
| Example 15 | A-1 | X-1 | 192 | 377 | 72384 | C | 1.8 |
| Example 16 | A-1 | X-1 | 170 | 550 | 93500 | C | 1.8 |
| Example 17 | A-1 | X-1 | 360 | 0.6 | 216 | A | 1.1 |
| Example 18 | A-1 | X-1 | 330 | 20 | 6600 | B | 1.2 |
| Example 19 | A-1 | X-1 | 340 | 98 | 33320 | C | 1.3 |
| Example 20 | A-1 | X-1 | 380 | 194 | 73720 | C | 1.5 |
| Example 21 | A-1 | X-1 | 215 | 206 | 44290 | C | 1.7 |
| Example 22 | A-1 | X-1 | 280 | 340 | 95200 | C | 2.0 |
| Example 23 | A-1 | X-1 | 216 | 435 | 93960 | C | 2.2 |
| Example 24 | A-2 | X-1 | 0.8 | 24 | 19.2 | A | 1.0 |
| Example 25 | A-2 | X-1 | 205 | 420 | 86100 | C | 2.1 |
| Example 26 | A-1 | X-2 | 4 | 82 | 328 | A | 1.0 |
| | A-3 | | 235 | 226 | 53110 | | |
| Example 27 | A-1 | X-2 | 132 | 110 | 14520 | B | 1.2 |
| | A-3 | | 6 | 77 | 462 | | |
| Example 28 | A-2 | X-3 | 0.8 | 188 | 150 | A | 1.0 |
| | A-4 | | 14 | 152 | 2128 | | |
| Example 29 | A-2 | X-3 | 22 | 245 | 5390 | A | 1.0 |
| | A-4 | | 0.4 | 360 | 144 | | |
| Example 30 | A-1 | X-4 | 4 | 130 | 520 | A | 1.0 |
| | A-5 | | 30 | 82 | 2460 | | |
| Example 31 | A-1 | X-4 | 126 | 153 | 19278 | B | 1.2 |
| | A-5 | | 141 | 118 | 16638 | | |
| Example 32 | A-1 | X-1 | 23 | 97 | 2231 | A | 1.0 |
| | A-6 | | 35 | 112 | 3920 | | |
| Example 33 | A-1 | X-1 | 280 | 340 | 95200 | C | 2.2 |
| | A-6 | | 205 | 382 | 78310 | | |

**Table 2**

| | Composition (parts by mass) | | Thiol compound | | | Optical material | |
|---|---|---|---|---|---|---|---|
| | Thiol compound | Isocyanate compound | [NH₄⁺] µmol/kg | [SCN⁻] µmol/kg | [NH₄⁺] [SCN⁻] (µmol/kg)² | White turbidity | Color tone (YI value) |
| Comparative Example 1 | A-1 | X-1 | 420 | 618 | 259560 | E | 3.0 |
| Comparative Example 2 | A-1 | X-1 | 820 | 1010 | 828200 | E | 3.3 |
| Comparative Example 3 | A-2 | X-1 | 452 | 633 | 286116 | E | 2.9 |
| Comparative Example 4 | A-2 | X-1 | 937 | 865 | 810505 | E | 3.2 |
| Comparative Example 5 | A-1 | X-2 | 428 | 670 | 286760 | E | 3.0 |
| | A-3 | | 455 | 632 | 287560 | | |
| Comparative Example 6 | A-1 | X-2 | 1035 | 1150 | 1190250 | E | 3.5 |
| | A-3 | | 974 | 826 | 804524 | | |
| Comparative Example 7 | A-2 | X-3 | 458 | 702 | 321516 | E | 3.1 |
| | A-4 | | 792 | 1223 | 968616 | | |
| Comparative Example 8 | A-2 | X-3 | 1108 | 917 | 1016036 | E | 3.4 |
| | A-4 | | 922 | 645 | 594690 | | |
| Comparative Example 9 | A-1 | X-4 | 428 | 670 | 286760 | E | 2.8 |
| | A-5 | | 529 | 707 | 374003 | | |
| Comparative Example 10 | A-1 | X-4 | 1035 | 1150 | 1190250 | E | 3.6 |
| | A-5 | | 606 | 987 | 598122 | | |
| Comparative Example 11 | A-1 | X-1 | 428 | 670 | 286760 | E | 2.9 |
| | A-6 | | 516 | 708 | 365328 | | |
| Comparative Example 12 | A-1 | X-1 | 1035 | 1150 | 1190250 | E | 3.5 |
| | A-6 | | 955 | 1004 | 958820 | | |

## Claims

1. A composition for optical materials which comprises: a polythiol compound satisfying any of the following i) to iii)
i) the compound has an ammonium cation concentration of 0.1 to 400 µmol/kg,
ii) the compound has a thiocyanic acid anion concentration of 0.1 to 600 µmol/kg, or
iii) the compound has an ammonium cation concentration of 0.1 to 400 µmol/kg and a thiocyanic acid anion concentration of 0.1 to 600 µmol/kg, and an ion concentration product of the ammonium cation and the thiocyanic acid anion is 0.01 to 100,000 (µmol/kg)²;
and a polyisocyanate compound.

2. The composition for optical materials according to claim 1, wherein the polythiol compound is at least one compound selected from the group consisting of 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene and 2,5-bis(mercaptomethyl)-1,4-dithiane.

3. A method for producing the composition for optical materials according to claim 1 or 2, wherein the polythiol compound is mixed with the polyisocyanate compound.

4. An optical material obtained by polymerizing the composition for optical materials according to claim 1 or 2.

5. Use of a polythiol compound satisfying any of i) to iii) below for a composition for optical materials:
i) the compound has an ammonium cation concentration of 0.1 to 400 µmol/kg;
ii) the compound has a thiocyanic acid anion concentration of 0.1 to 600 µmol/kg; or
iii) the compound has an ammonium cation concentration of 0.1 to 400 µmol/kg and a thiocyanic acid anion concentration of 0.1 to 600 µmol/kg, and an ion concentration product of the ammonium cation and the thiocyanic acid anion is 0.01 to 100,000 (µmol/kg)².
